# EUROPÄISCHE PATENTSCHRIFT

(11) **EP 2 326 941 B1**
(45) Veröffentlichungstag und Bekanntmachung des Hinweises auf die Patenterteilung: **17.09.2014**
(21) Anmeldenummer: 08802552.3
(22) Anmeldetag: 24.09.2008
(51) Int. Cl.: G01N 23/04, G01M 17/013

(54) **VORRICHTUNG ZUR MATERIALPRÜFUNG VON PRÜFOBJEKTEN MITTELS RÖNTGENSTRAHLUNG**
DEVICE FOR TESTING THE MATERIAL OF TEST OBJECTS BY MEANS OF X-RAY RADIATION
DISPOSITIF DE TEST DE MATÉRIAUX D'OBJETS À TESTER AU MOYEN DE RAYONS X

(43) Veröffentlichungstag der Anmeldung: 01.06.2011
(73) Patentinhaber: GE Sensing & Inspection Technologies GmbH, 50354 Hürth (DE)
(72) Erfinder: KRÄMER, Jan, 23568 Lübeck (DE); STUKE, Ingo, 23858 Reinfeld (DE); BRETZKE, Nicolas, 24245 Kirchbarkau (DE); LUX, Holger, 22941 Bargteheide (DE); WÜSTENBECKER, Michael, 22952 Lütjensee (DE)
(74) Vertreter: Vorberg, Jens
(86) Internationale Anmeldenummer: PCT/EP2008/008072
(87) Internationale Veröffentlichungsnummer: WO 2010/034323

(56) Entgegenhaltungen:
- DE-A1- 2 237 153
- DE-A1- 2 325 240
- DE-A1- 19 944 314
- DE-B3- 10 260 883
- DE-U1- 20 208 174
- GB-A- 1 420 527

## Beschreibung

Die Erfindung betrifft eine Vorrichtung zur Materialprüfung von Prüfobjekten mittels Röntgenstrahlung nach dem Oberbegriff von Anspruch 1.

Eine bewährte Räderprüfanlage umfasst ein Röntgensystem mit einer Röntgenröhre und einem Bildverstärker, die an einem um eine horizontale Achse schwenkbaren C-Arm montiert sind. Ein zu prüfendes Rad wird mittels eines Rollenförderers zugefördert und von einem horizontal verschiebbaren Träger, der mit zwei rollenbestückten Greifarmen versehen ist, aufgenommen und in die Prüfposition verschoben. In der Prüfposition wird für mehrere Schwenkpositionen des C-Armes jeweils ein Röntgenscan aufgenommen, indem das Rad durch Antrieb der am unteren Felgenhorn angreifenden Greiferrollen um seine Achse rotiert und mittels des Trägers translatorisch verschoben wird. Es handelt sich somit um eine dreiachsige Prüfvorrichtung. Nach der Röntgenprüfung wird das Rad von dem Träger abgefördert und an einen ausgangsseitigen Rollenförderer übergeben. Danach wird der Träger zur Eingangsseite zurückgefahren, um das nächste zu prüfende Rad aufzunehmen.

Bei einer aus DE 101 53 379 B4 bekannten mehrachsigen Räderprüfanlage steht die Röntgenvorrichtung fest, wobei das Rad um eine in der Transportebene liegende Querachse schwenkbar ist und durch Antrieb von am unteren Felgenhorn angreifenden Greiferrollen um seine Achse rotiert wird. Um die Schwenkbarkeit des Rades um die Querachse zu ermöglichen, sind Transportketten zum Zu- und Abfördern des zu prüfenden Rades an Schwenkarmen drehbar gelagert, die während der Röntgenprüfung abgeschwenkt werden. Dieser Aufbau ist außerordentlich kompliziert.

DE 202 08 174 U1 offenbart eine dreiachsige Räderprüfanlage mit einem drehbaren Trägerkarussell zum Zu- und Abführen von Prüfobjekten in eine bzw. aus einer Prüfposition, in der das zu prüfende Rad mittels Profilrädern um die eigene Achse gedreht wird. Der C-Bogen für die Röntgenvorrichtung ist um zwei zueinander senkrechte Horizontalachsen schwenkbar, was konstruktiv sehr aufwendig ist. Das Trägerkarussell ist außerordentlich raumgreifend im Vergleich zu translatorischen Fördervorrichtungen.

DE 199 44 314 A1 offenbart ein Prüfgerät für Reifen mit einer Positioniervorrichtung für den zu prüfenden Reifen und einer Prüfvorrichtung, insbesondere einer Laser-Prüfvorrichtung, zur Ermittlung von Fehlstellen des Reifens. Die Positioniervorrichtung des Reifens kann drehbar gelagert sein. Durch eine Drehung der Prüfvorrichtung und/oder der Positioniervorrichtung wird eine Relativdrehung zwischen den Messköpfen und dem Reifen erzielt. Zur Erfassung von Gewebeschäden in dem Reifen kann das Prüfgerät des Weiteren eine nicht näher beschriebene Röntgeneinrichtung aufweisen.

DE-OS 2 237 153 offenbart eine Vorrichtung mit einem Karussell-Träger, der durch Schwenkung um 180° den Transport eines Kfz-Reifens in eine und aus einer Prüf- oder Bearbeitungsanlage ermöglicht. Der Reifen ist mittels an dem oberen und unteren Reifenwulst angreifenden, frei drehbaren Stützrollen frei drehbar gehalten und wird zur Röntgenprüfung durch einen externen Antrieb in Umdrehung versetzt, wobei der Karussell-Träger festgehalten wird.

DE 102 60 883 B3 offenbart eine Vorrichtung zur Prüfung von Prüfteilen mit einer translatorischen Fördervorrichtung und einem Manipulator in Form eines rotierbaren Tisches, der durch Schwenkung den Transport eines Prüfteils zwischen einer Prüfposition, in der die nicht näher beschriebene Röntgenprüfung stattfindet, und einer Be-/Entladeposition ermöglicht.

GB 1 420 527 offenbart eine Röntgenvorrichtung zum Inspizieren von Reifen mit einer translatorischen Fördervorrichtung und einer am Reifenmantel ansetzenden Spindelanordnung zum Anheben eines Reifens von der translatorischen Fördervorrichtung in eine Prüfposition und zum Rotieren des Reifens in der Prüfposition.

DE 2 325 240 A1 offenbart eine Reifenprüfvorrichtung mit zwei Röntgenköpfen zur Messung des Laufflächenbereichs und des Reifenwulstes und einem mittels eines Schlittens translatorisch verschiebbaren Manipulatorsystem zum Aufnehmen eines Reifens von einem Förderer, Transportieren des Reifens zu einer Prüfstation, Bewegen des Reifens um seine Achse während der Prüfung, und Transportieren des Reifens zurück zu dem Förderer. Das Manipulatorsystem umfasst einen an der Reifenwulst angreifenden manipulierenden Mechanismus, mit dem der Reifen während der Röntgenprüfung um seine Achse gedreht wird. Die Röntgenröhre zur Messung des Laufflächenbereichs ist um eine vertikale Achse um den Brennpunkt in sich drehbar, damit der Röntgenstrahl den Laufflächenbereich von dem einen Wulst zu dem anderen Wulst überstreichen kann.

Es ist eine einachsige Räderprüfvorrichtung nach dem Oberbegriff von Anspruch 1 mit einem LDA (lineares Dioden-Array)-Zeilendetektor bekannt. Für die Röntgenprüfung eines Rades wird das Rad mittels eines Kettenförderers zu der Röntgenvorrichtung transportiert und von einer innen angreifenden Greifeinrichtung aus der Transportebene in eine Prüfposition angehoben und dort mittels an der Greifeinrichtung vorgesehener Rotationsmittel um seine Achse rotiert. Eine horizontale Schwenkung der Röntgenvorrichtung oder des Rades ist nicht erforderlich, wodurch der Aufwand gegenüber den vorgenannten Prüfvorrichtungen verringert werden kann. Jedoch kann die präzise Rotation des zu prüfenden Rades während der Röntgenprüfung insbesondere durch Gießgrate am unteren Felgenhorn gestört werden, was die Auflösung und damit die Zuverlässigkeit des Prüfverfahrens beeinträchtigen kann. Zudem ist das Anheben des Rades durch die innen an der Felge angreifende Greifeinrichtung aufwendig und zeitraubend.

Die Aufgabe der Erfindung besteht darin, eine kompakte, unaufwendige und zuverlässige Prüfvorrichtung bereitzustellen.

Die Erfindung löst diese Aufgabe mit den Mitteln der unabhängigen Ansprüche. Statt der herkömmlichen am Prüfobjekt angreifenden rotationserzeugenden Elemente wie Kegelrollen oder Ketten wird erfindungsgemäß das Prüfobjekt einfach auf einem Träger abgelegt und der Träger gemeinsam mit dem darauf abgelegten Prüfobjekt insgesamt rotiert. Die Rotation des Trägers kann mit hoher Präzision und mit absolut gleichförmiger Rotationsgeschwindigkeit durchgeführt werden und hängt nicht von Eigenschaften des Prüfobjekts, bspw. Gussgraten ab, wodurch eine hohe Messauflösung und damit eine gesteigerte Zuverlässigkeit der Prüfvorrichtung erreicht wird. Der Träger ist vorzugsweise frei von Greifeinrichtungen für das Prüfobjekt bzw. unmittelbar auf das Prüfobjekt wirkenden Rotationseinrichtungen.

Erfindungsgemäß handelt es sich um eine einachsige Prüfvorrichtung, d.h. ein vollständiges Röntgenbild eines Prüfobjekts kann lediglich durch Rotation von Prüfobjekt und Röntgenvorrichtung relativ zueinander um eine im Wesentlichen vertikale Rotationsachse erhalten werden. Weitere Rotationen oder translatorische Bewegungen von Prüfobjekt und Röntgenvorrichtung relativ zueinander sind während der Prüfung nicht erforderlich, wodurch der Aufwand entsprechend reduziert werden kann.

Erfindungsgemäß ist der Träger als translatorische Fördervorrichtung für das Prüfobjekt ausgebildet. Es ist dann kein zusätzlicher Förderer zum Fördern des Prüfobjekts in die bzw. aus der Prüfposition und keine entsprechende zeitraubende Übergabe des Prüfobjekts erforderlich, wodurch der Aufwand erheblich sinkt und die Zeitdauer pro Stück erheblich verringert und der Durchsatz entsprechend gesteigert werden kann. Vorzugsweise sind weitere translatorische Fördereinrichtungen vor und nach dem Träger aus der Transportebene heraus verschiebbar, insbesondere um eine ungehinderte Rotation des Trägers in der Transportebene zu ermöglichen. Der Träger und das Prüfobjekt können dann jederzeit in der Transportebene verbleiben und müssen insbesondere nicht vertikal verschiebbar sein. Das Prüfobjekt liegt vorzugsweise während des gesamten Vorgangs auf der translatorischen Fördervorrichtung. In einer bevorzugten Ausführungsform können die translatorischen Fördereinrichtungen jeweils an einem ohnehin vorgesehenen, insbesondere vertikal verstellbaren Schieber für eine Be- bzw. Entladeöffnung in einer Strahlenschutzkabine angebracht sein, so dass für jeden Schieber und die zugeordnete translatorische Fördereinrichtung jeweils nur eine Verschiebemechanik erforderlich ist. In einer alternativen Ausführungsform kann der Träger relativ zu den feststehenden translatorischen Fördereinrichtungen insbesondere vertikal aus der Transportebene heraus verschiebbar sein.

Vorzugsweise besteht der Träger mindestens in dem durchstrahlten Bereich aus einem im Wesentlichen röntgentransparenten Material, damit das Röntgenbild im Wesentlichen nicht durch den Träger beeinflusst wird. Aus demselben Grund weist der Träger vorzugsweise eine möglichst einheitliche und geringe Dicke auf. Dies lässt sich beispielsweise mit einem Bandförderer realisieren.

Nach einem alternativen Aspekt der Erfindung wird für die Röntgenprüfung die gesamte Röntgenvorrichtung um die vertikale Rotationsachse rotiert, während das Prüfobjekt festgehalten wird. Die Rotation der Röntgenvorrichtung kann ebenfalls mit hoher Präzision und exakt konstanter Rotationsgeschwindigkeit durchgeführt werden und hängt nicht von Eigenschaften des Prüfobjekts, bspw. Gussgraten, ab.

Die Erfindung ist vorzugsweise auf die Prüfung im Wesentlichen rotationssymmetrischer Objekte, die durch Drehung um 360°/n mit n = 2 oder 3 oder ... in sich selbst übergehen, anwendbar. Eine besonders bevorzugte Anwendung betrifft die Prüfung von Aluminiumgussrädern für Kraftfahrzeuge. Andere denkbare Anwendungen betreffen beispielsweise Kraftfahrzeugreifen oder Bremsscheiben. Die Erfindung ist aber auch auf die Prüfung nicht-rotationssymmetrischer Teile, beispielsweise Fahrwerksteile, anwendbar.

Die Erfindung wird im Folgenden anhand vorteilhafter Ausführungsformen unter Bezugnahme auf die beigefügten Figuren erläutert. Dabei zeigt:
- Fig. 1:: eine perspektivische Ansicht einer Prüfvorrichtung im Ladezustand;
- Fig. 2:: eine perspektivische Ansicht der Prüfvorrichtung aus Fig. 1 im Prüfzustand;
- Fig. 3:: eine seitliche Ansicht auf die Prüfvorrichtung aus Fig. 1 im Ladezustand;
- Fig. 4:: eine seitliche Ansicht auf die Prüfvorrichtung aus Fig. 1 im Prüfzustand;
- Fig. 5:: eine Draufsicht auf die Prüfvorrichtung aus Fig. 1;
- Fig. 6:: eine Ansicht auf die Prüfvorrichtung aus Fig. 1 aus der Transportrichtung;
- Fig. 7:: eine perspektivische Ansicht einer Prüfvorrichtung in einer weiteren Ausführungsform im Ausschnitt; und
- Fig. 8:: eine Ansicht auf die Prüfvorrichtung aus Fig. 7 aus der Transportrichtung.

Die Prüfvorrichtung 10 umfasst eine Strahlenschutzkabine 11 und eine in der Strahlenschutzkabine 11 angeordnete Röntgenvorrichtung 20, die eine Röntgenquelle 12 zum Durchstrahlen eines auf einem Träger 33 angeordneten Prüfobjekts 15 und einen Röntgendetektor 13 zum Aufzeichnen der durch das Prüfobjekt 15 tretenden Strahlung aufweist. Die Strahlenschutzkabine 11 schirmt die Umgebung im Betrieb vollständig gegenüber der von der Röntgenquelle 12 erzeugten Röntgenstrahlung ab und umfasst zu diesem Zweck Seitenwände 22 bis 25, eine Deckenwand 49 und gegebenenfalls eine Bodenwand 21, die beispielsweise aus Platten mit einer Bleilage und Stützstreben 50 aufgebaut sind. Die Deckenwand 49 und gegebenenfalls die Seitenwand 25 sind für eine bessere Einsehbarkeit in den Figuren weggelassen.

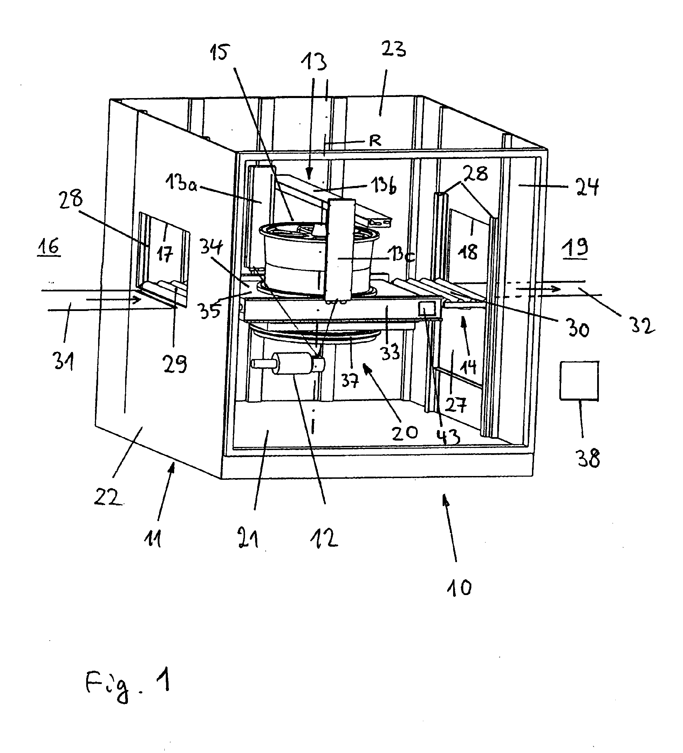

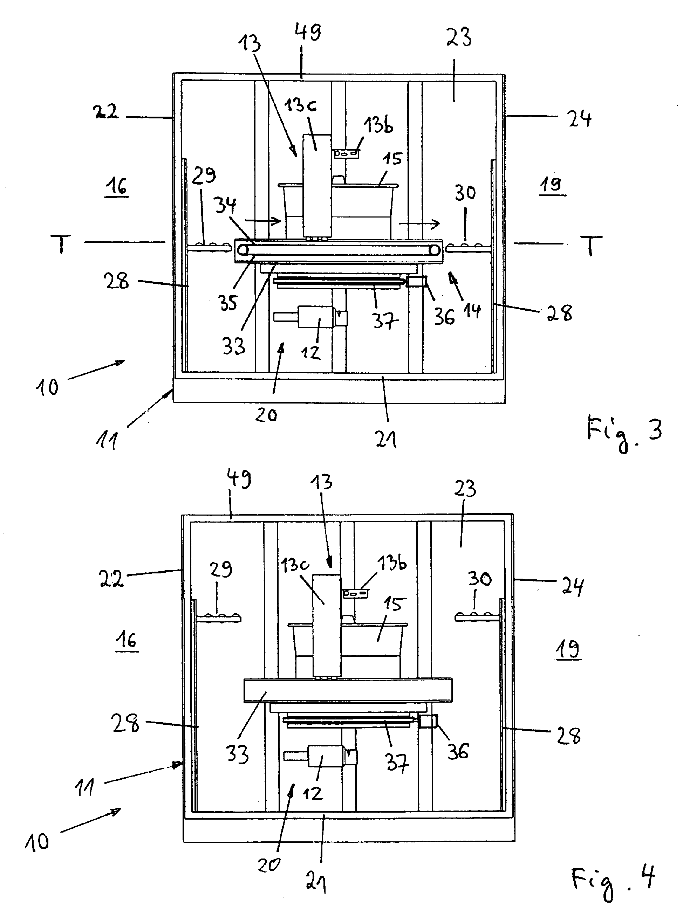

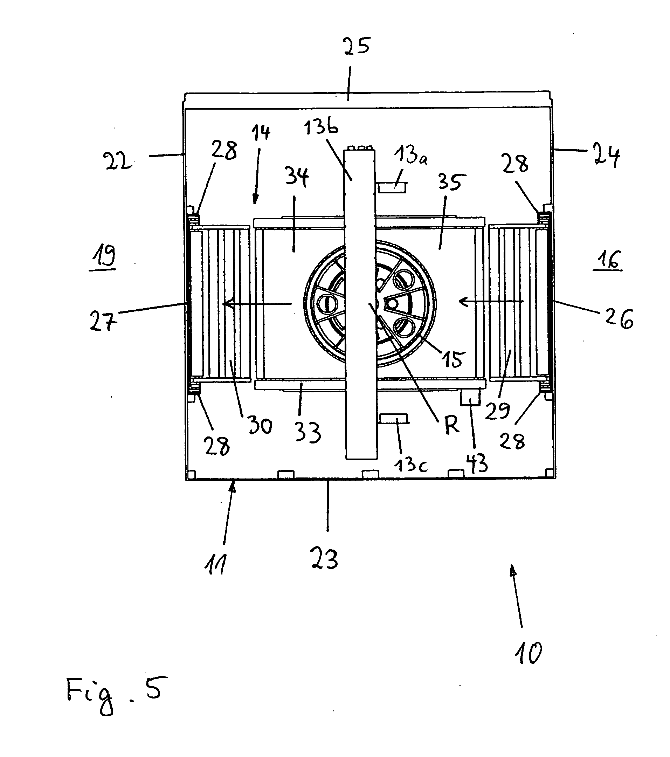

Eine eingangsseitige Seitenwand 22 weist eine Eingangsöffnung 17 für zu prüfende Prüfobjekte 15 auf. Eine gegenüberliegende ausgangsseitige Seitenwand 24 weist eine Ausgangsöffnung 18 für geprüfte Prüfobjekte 15 auf. Die Strahlenschutzkabine 11 weist jeweils einen in Führungsschienen 28 beispielsweise mittels Rollen 51 geführten Schieber 26, 27 zum Verschließen der Eingangsöffnung 17 und Ausgangsöffnung 18 im Prüfbetrieb und zum Öffnen im Ladebetrieb auf. Eine der Seitenwände 22 bis 25 kann vorzugsweise eine nicht gezeigte Tür aufweisen, um die Begehbarkeit der Kabine durch Servicepersonal zu ermöglichen. Die Prüfvorrichtung 10 umfasst weiterhin eine translatorische Fördervorrichtung 14 zur seriellen Förderung von Prüfobjekten 15 durch die Strahlenschutzkabine 11 in einer Transportrichtung, wie beispielsweise in Fig. 1, 3, 5 und 8 mittels Pfeilen angedeutet ist. Die Fördervorrichtung 14 umfasst eine im Inneren der Strahlenschutzkabine 11 angeordnete Zufördereinrichtung 29 zum Zufördern von Prüfobjekten zu dem Träger 33, eine im Inneren der Strahlenschutzkabine 11 angeordnete Abfördereinrichtung 30 zum Abfördern von Prüfobjekten von dem Träger 33 und gegebenenfalls entsprechende externe Förderer 31, 32 auf der Eingangsseite 16 und der Ausgangsseite 19. Die Fördereinrichtungen 29, 30 sind beispielsweise als Rollenförderer ausgebildet, wobei die Rollen für eine präzise Übergabe zu bzw. von dem Träger 33 aktiv angetrieben sein können. Die Fördereinrichtungen 29, 30 und die Förderer 31, 32 definieren eine durchgehende Transportebene T, siehe insbesondere Figur 3. Die Fördereinrichtung 29 ist an dem Schieber 26 und die Fördereinrichtung 30 an dem Schieber 27 befestigt, so dass ein Verschieben der Schieber 26, 27 in die Offenstellung gleichzeitig die Fördereinrichtungen 29, 30 in die Transportebene verschiebt und ein Verschieben der Schieber 26, 27 in die Geschlossenstellung gleichzeitig die Fördereinrichtungen 29, 30 aus der Transportebene heraus verschiebt.

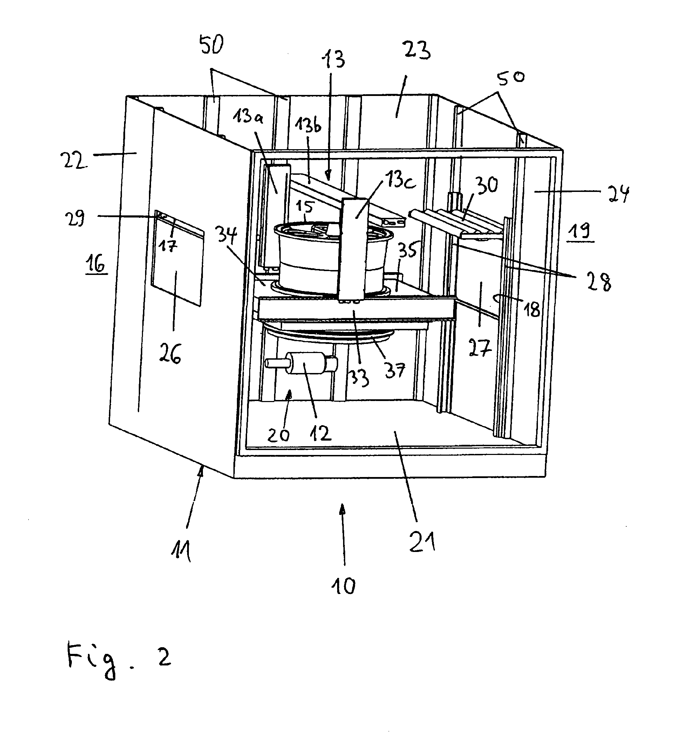

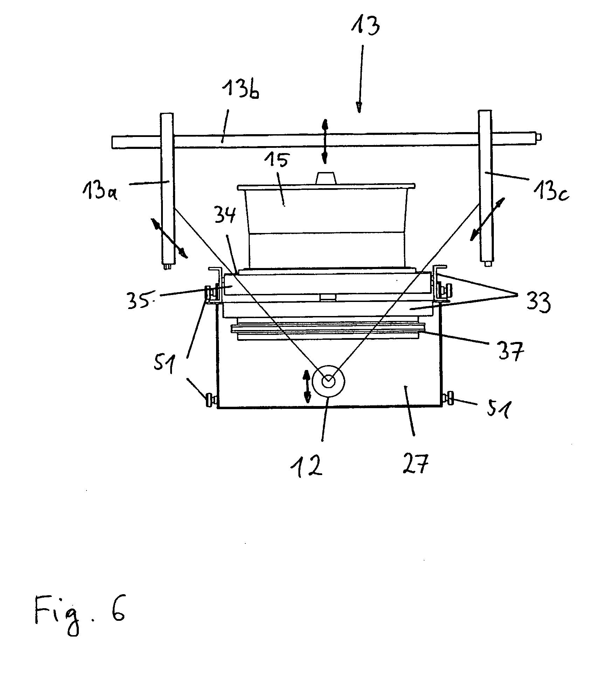

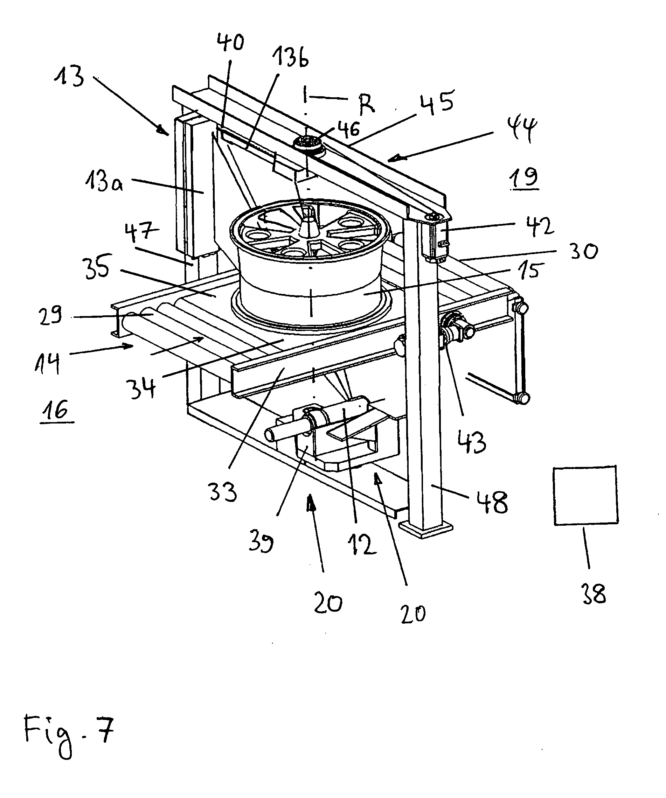

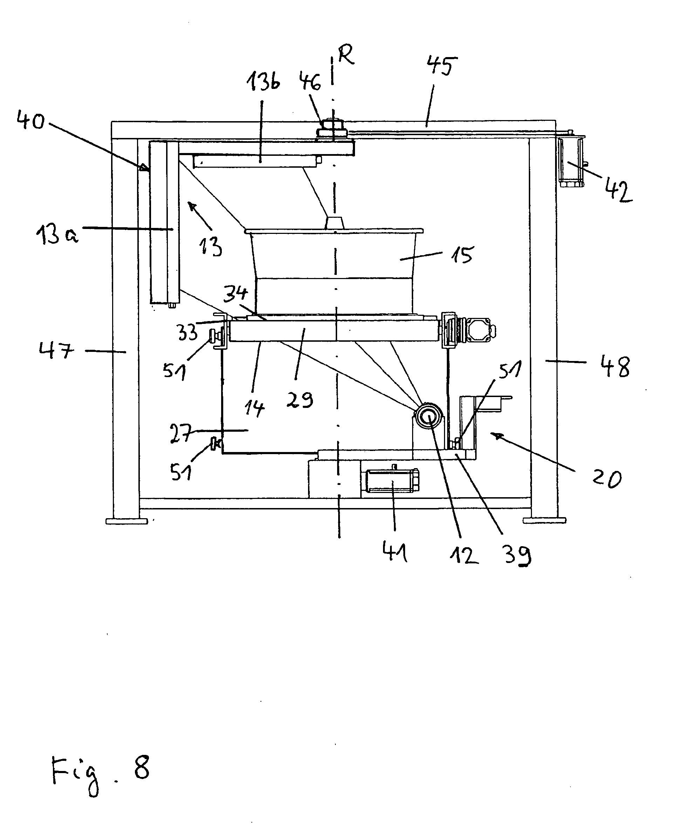

Die Röntgenröhre 12 ist vorzugsweise eine Fächerstrahl- (fan beam) Röntgenröhre mit einem Fächerwinkel von mindestens 45°, vorzugsweise mindestens 60°, weiter vorzugsweise mindestens 75°, beispielsweise etwa 90°, so dass bei geeigneter Anordnung der Röntgenröhre 12 übliche Kraftfahrzeugräder über einen möglichst großen, vorzugsweise ihren gesamten, Querschnitt durchleuchtet werden können (siehe insbesondere Fig. 6). In der Ausführungsform gemäß Figuren 1 bis 6 liegt der zentrale Röntgenstrahl aus der Röntgenquelle 12 auf der Rotationsachse R. In der Ausführungsform gemäß Figuren 7 und 8 schließt der zentrale Röntgenstrahl aus der Röntgenquelle 12 einen Winkel im Bereich von 30° bis 60° mit der Rotationsachse R ein, so dass der halbe Querschnitt des Prüfobjekts 15 ausgeleuchtet wird, wie am besten aus Fig. 7 ersichtlich ist.

Der Röntgendetektor 13 ist ein zeilenförmiger oder aus zeilenförmigen Abschnitten zusammengesetzter lineares Dioden-Array-(LDA-)Detektor und ist zweckmäßigerweise geeignet dimensioniert und angeordnet, um den gesamten Röntgenstrahl aufzuzeichnen. Der Röntgendetektor 13 ist vorzugsweise bogenförmig, insbesondere C-, U- oder L-förmig, um das Prüfobjekt herum angeordnet, so dass bei gegebenem Detektionswinkel die Länge des Detektors gegenüber einer einzigen Detektorzeile erheblich reduziert werden kann. Zweckmäßigerweise besteht der Röntgendetektor 13 aus einer Mehrzahl von in einem Winkel zueinander angeordneten Detektorelementen 13a, 13b, 13c. Im Ausführungsbeispiel gemäß Fig. 1 bis 6 umfasst der U-förmige Röntgendetektor 13 beispielsweise drei Detektorzeilen 13a, 13b, 13c mit einer horizontalen Detektorzeile 13b und zwei vertikalen Detektorzeilen 13a, 13c. Der Röntgendetektor 13 ist etwa symmetrisch um die Rotationsachse R angeordnet. Im Ausführungsbeispiel gemäß Fig. 7 und 8 mit einer konventionellen Röntgenröhre, die einen Strahlfächer von maximal 40° aufweist, ist ein L-förmiger Röntgendetektor 13 aus beispielsweise zwei Detektorzeilen 13a, 13b mit einer horizontalen Detektorzeile 13b und einer vertikalen Detektorzeile 13a ausreichend. Der Röntgendetektor 13 ist hier asymmetrisch zu der Rotationsachse R angeordnet.

Um eine Anpassung an Prüfobjekte 15 unterschiedlicher Abmessungen zu ermöglichen, sind die Röntgenquelle 12 und/oder der Röntgendetektor 13 bzw. die Detektorelemente 13a, 13b, 13c vorzugsweise relativ zueinander verschiebbar, insbesondere in einer Ebene senkrecht zu der Transportrichtung, wie dies in Figur 6 mit Doppelpfeilen angedeutet ist. Insbesondere kann das horizontale Detektorelement 13b vertikal bzw. mit einer Vertikalkomponente und/oder die vertikalen Detektorelemente 13a, 13c horizontal bzw. mit einer Horizontalkomponente verschiebbar sein. Alternativ oder zusätzlich kann die Röntgenquelle 12 insbesondere vertikal bzw. mit einer Vertikalkomponente verschiebbar sein. Die Einstellung der Position der Röntgenquelle 12 und des Röntgendetektors 13 erfolgt pro Prüfobjekt 15 jeweils einmal vor dem Einschalten der Röntgenröhre 12; während der Röntgenprüfung erfolgt keine Verschiebung der Röntgenquelle 12 oder des Röntgendetektors 13.

Der Träger 33 weist eine zweckmäßigerweise im Wesentlichen ebene Auflagefläche 34 auf, auf der das Prüfobjekt 15 während des Transports und der gesamten Röntgenprüfung einfach aufliegt, ohne mittels Greifeinrichtungen oder dergleichen gehalten werden zu müssen. Die Auflagefläche 34 wird insbesondere von der Oberseite eines endlos umlaufenden Fördermittels, hier des Transportbandes 35 gebildet. Das Transportband 35 wird mittels eines Antriebs 43 angetrieben, um ein Prüfobjekt 15 von der Zufördereinrichtung 29 in die Prüfposition und ein geprüftes Prüfobjekt 15 zu der Abfördereinrichtung 30 zu transportieren. Der Träger 33 ist daher als translatorischer Förderer ausgebildet und Teil der durchgehenden Fördervorrichtung 14. Das Transportband 35 ist zweckmäßigerweise im Wesentlichen röntgentransparent; allgemeiner trifft dies auf den Träger 33 mindestens in dem durchstrahlten Bereich zu.

Zur Durchführung der Röntgenprüfung eines Prüfobjektes 15 ist der Träger 33 samt dem aufliegenden Prüfobjekt 15 insgesamt mittels eines Rotationslagers 37 und eines Antriebs 36 um eine vertikale Rotationsachse R rotierbar. Zuvor werden die Schieber 26, 27 zum Verschließen der Kabinenöffnungen 17, 18 verschoben, wodurch gleichzeitig die daran befestigten Fördereinrichtungen 29, 30 aus der Transportebene nach oben verschoben werden, damit sie die Rotation des Trägers 33 nicht behindern. Das Fördermittel 35 wird angehalten, wenn das Prüfobjekt sich in der Prüfposition befindet, was mittels eines nicht gezeigten Sensors feststellbar sein kann. Es ist dabei nicht erforderlich, dass eine etwaige Rotationsachse des Prüfobjekts 15 exakt mit der Rotationsachse R des Trägers 33 zusammenfällt. Es können auch Einrichtungen zum Zentrieren des Prüfobjekts 15 um die Rotationsachse R vorgesehen sein, beispielsweise seitliche Schieber oder Mittel zum horizontalen Verschieben des Trägers 33.

Wenn sich das Prüfobjekt 15 in der Prüfposition befindet, wird die Röntgenquelle 12 eingeschaltet und lediglich der Träger 33 um die vertikale Rotationsachse R rotiert, um ein vollständiges Röntgenbild des Prüfobjekts 15 aufzuzeichnen. Die Röntgenröhre 12 liefert für die Materialprüfung üblicherweise Röntgenstrahlung mit mindestens 60 kV, vorzugsweise mindestens 100 kV und/oder mindestens 1 kW, vorzugsweise mindestens 3 kW. Die gesamte Röntgenprüfung eines Prüfobjekts 15 erfolgt lediglich durch Rotation um die vertikale Rotationsachse R; irgendeine weitere Schwenkung oder Verschiebung des Prüfobjekts 15 und/oder der Röntgenvorrichtung 20 ist dazu nicht erforderlich. Am Prüfobjekt 15 angreifende Mittel, um das Prüfobjekt 15 in Rotation zu versetzen, beispielsweise Kegelrollen oder Mitnehmer, sind ebenfalls entbehrlich. Das Prüfobjekt 15 verbleibt während des gesamten Vorgangs einschließlich der Röntgenprüfung in der Transportebene T, so dass ein umständliches und zeitraubendes Entfernen des Prüfobjekts von der Fördervorrichtung 14 bzw. aus der Transportebene T entfällt.

Nach der Aufzeichnung eines vollständigen Röntgenbildes wird die Röntgenquelle 12 ausgeschaltet. Die Rotation des Trägers 33 wird in einer zur Abförderung geeigneten Position beendet. Die Schieber 26, 27 werden in die Öffnungsposition verschoben, wodurch die Fördereinrichtungen 29, 30 in die Transportebene T verschoben werden. Das Transportmittel 35 des Trägers 33 und die Abfördereinrichtung 30 werden zum Abtransport des geprüften Prüfobjekts 15 durch die Ausgangsöffnung 18 und die Zufördereinrichtung 29 zum Zufördern des nächsten Prüfobjekts 15 angetrieben.

Sämtliche zuvor genannten Vorgänge werden mittels einer elektronischen programmierten Steuereinrichtung 38 automatisch gesteuert, die zu diesem Zweck beispielsweise über einen Datenbus mit den entsprechenden Antrieben, Sensoren, Stellgliedern und der Röntgenvorrichtung 20 verbunden ist. Die Steuereinrichtung 38 kann auch zur Auswertung der von dem Röntgendetektor 13 aufgezeichneten Röntgendaten programmiert sein und mit einem nicht gezeigten Eingabe-/Ausgabe-Terminal zum Bedienen der Prüfvorrichtung 10 und zur Anzeige des Prüfergebnisses verbunden sein.

Die Figuren 7 und 8 zeigen eine alternative Ausführungsform, bei der der Träger 33 während der Röntgenprüfung stillsteht und daher kein Drehlager 37 aufweist, und stattdessen die gesamte Röntgenvorrichtung 20 einheitlich um die vertikale Rotationsachse R rotiert. Die Kabine 11 ist in den Figuren 7 und 8 aus Gründen der Übersichtlichkeit nicht gezeigt. Die Röntgenröhre 12 und der Röntgendetektor 13 sind vorzugsweise jeweils an einem um die vertikale Rotationsachse R rotierbaren Träger 39 bzw. 40 angebracht, die ober- bzw. unterhalb der Transportebene angeordnet sind und jeweils einen eigenen Rotationsantrieb 41 bzw. 42 aufweisen, wodurch eine vollständige Umdrehung ohne Kollision mit der Fördervorrichtung 14 ermöglicht wird. Die Rotationsantriebe 41, 42 werden von der elektronischen Steuereinrichtung 38 gesteuert, so dass eine synchrone Rotation von Röntgenquelle 12 und Röntgendetektor 13 sichergestellt ist. Die Rotationsträger 39 und 40 sind daher vorzugsweise mechanisch entkoppelt und nur durch Antriebssteuerung gekoppelt. Dies ist aber nicht zwingend der Fall, eine mechanische Kopplung der Rotationsträger 39 und 40 ist ebenfalls denkbar. Die Prüfvorrichtung 10 umfasst ein Trägergestell 44 für das Rotationslager 46 für den oberhalb der Transportebene angeordneten rotierbaren Träger 40. Das Trägergestell 44 kann insbesondere einen horizontalen Träger 45 und zwei diesen tragende vertikale Träger 47, 48 aufweisen. Aufgrund des Stillstands des Trägers 33 müssen die Fördereinrichtungen 29, 30 nicht vertikal verstellbar sein und können beispielsweise an dem Träger 33 angebracht sein.

## Patentansprüche

1. Vorrichtung (10) zur Materialprüfung von Prüfobjekten (15) mittels Röntgenstrahlung, umfassend eine translatorische Fördervorrichtung (14) zum automatischen seriellen Zu- und Abführen von Prüfobjekten (15) in eine bzw. aus einer Prüfposition und eine Röntgenvorrichtung (20) mit einer Röntgenquelle (12) zum Durchstrahlen eines auf einem Träger (33) in der Prüfposition gehaltenen Prüfobjekts (15) und einem Röntgendetektor (13), wobei während der Röntgenprüfung das Prüfobjekt (15) und die Röntgenvorrichtung (20) relativ zueinander lediglich um eine im Wesentlichen vertikale Rotationsachse R rotierbar sind, **dadurch gekennzeichnet, dass** zur Röntgenprüfung der Träger (33) gemeinsam mit dem darauf gehaltenen Prüfobjekt (15) insgesamt um die Rotationsachse R rotierbar ist und der Träger (33) als translatorische Fördervorrichtung für das Prüfobjekt ausgebildet ist.

2. Vorrichtung nach Anspruch 1, wobei der Träger (33) ein endlos umlaufendes Fördermittel (35) zum Zu- und Abfördern eines Prüfobjekts (15) in die bzw. aus der Prüfposition aufweist.

3. Vorrichtung nach Anspruch 2, wobei das Fördermittel (35) ein Förderband ist.

4. Vorrichtung nach einem der vorangehenden Ansprüche, wobei der Träger (33) eine im Wesentlichen ebene Auflage (34) für das Prüfobjekt (15) aufweist.

5. Vorrichtung nach einem der vorangehenden Ansprüche, wobei das Prüfobjekt (15) während des gesamten Lade- und Prüfvorgangs in einer durchgehenden Transportebene T verbleibt.

6. Vorrichtung nach einem der vorangehenden Ansprüche, umfassend mindestens eine translatorische Fördereinrichtung (29, 30) zum Zu- oder Abfördern eines Prüfobjekts (15) zu bzw. von dem Träger (33).

7. Vorrichtung nach Anspruch 6, wobei die translatorische Fördereinrichtung (29, 30) und der Träger (33) relativ zueinander verschiebbar sind.

8. Vorrichtung nach Anspruch 6 oder 7, wobei die translatorische Fördereinrichtung (29, 30) aus der Transportebene T heraus verschiebbar ist.

9. Vorrichtung nach einem der Ansprüche 6 bis 8, wobei die translatorische Fördereinrichtung (29, 30) an einem verstellbaren Schieber (26, 27) zum Öffnen bzw. Verschließen einer Ladeöffnung (17, 18) angebracht ist.

10. Vorrichtung nach einem der vorangehenden Ansprüche, wobei der Träger (33) mindestens in dem durchstrahlten Bereich aus einem im Wesentlichen röntgentransparenten Material besteht.

11. Vorrichtung (10) zur Materialprüfung von Prüfobjekten (15) mittels Röntgenstrahlung, umfassend eine translatorische Fördervorrichtung (14) zum automatischen seriellen Zu- und Abführen von Prüfobjekten (15) in eine bzw. aus einer Prüfposition und eine Röntgenvorrichtung (20) mit einer Röntgenquelle (12) zum Durchstrahlen eines auf einem Träger (33) in einer Prüfposition gehaltenen Prüfobjekts (15) und einem Röntgendetektor (13), wobei während der Röntgenprüfung das Prüfobjekt (15) und die Röntgenvorrichtung (20) relativ zueinander lediglich um eine vertikale Rotationsachse R rotierbar sind, **dadurch gekennzeichnet, dass** zur Röntgenprüfung die Röntgenvorrichtung (20) insgesamt um die vertikale Rotationsachse R rotierbar ist und der Träger (33) als translatorische Fördervorrichtung für das Prüfobjekt ausgebildet ist.

12. Vorrichtung nach Anspruch 11, wobei die Röntgenquelle (12) und der Röntgendetektor (13) jeweils an einem rotierbaren, ober- bzw. unterhalb der Transportebene T angeordneten Träger (39, 40) montiert sind.

13. Vorrichtung nach einem der vorangehenden Ansprüche, wobei der Röntgendetektor (13) mindestens eine Detektorzeile (13a, 13b, 13c) umfasst.

14. Vorrichtung nach einem der vorangehenden Ansprüche, wobei der Röntgendetektor (13) bogenförmig um das Prüfobjekt (15) herum angeordnet ist.

15. Vorrichtung nach einem der vorangehenden Ansprüche, wobei die Röntgenquelle (12) eine Fächerstrahl-Röntgenröhre mit einem Fächerwinkel von mindestens 45° ist.

## Claims

1. A device (10) for the material testing of test objects (15) by means of X-radiation, comprising a translational conveying apparatus (14) for automatically serially delivering test objects (15) into or out of a testing position, and an X-ray device (20) with an X-ray source (12) for penetrating with radiation a test object (15) retained in the testing position on a carrier means (33), and an X-ray detector (13), wherein the test object (15) and the X-ray device (20) are rotatable relative to each other only about a substantially vertical axis of rotation R during the X-ray testing, **characterized in that**, for X-ray testing, the carrier means (33), together with the test object (15) retained thereon, is rotatable as a whole about the axis of rotation R, and the carrier means (33) is configured as a translational conveying apparatus for the test object.

2. The device according to claim 1, wherein the carrier means (33) is a continuously revolving conveying means (35) for feeding and conveying away a test object (15) into or from the testing position.

3. The device according to claim 2, wherein the conveying means (35) is a conveying belt.

4. The device according to any one of the preceding claims, wherein the carrier means (33) has a substantially plane support (34) for the test object (15).

5. The device according to any one of the preceding claims, wherein the test object (15) remains in a continuous plane of transport T over the entire loading and testing process.

6. The device according to any one of the preceding claims, comprising at least one translational conveying device (29, 30) for feeding or conveying away a test object (15) to or from the carrier means (33).

7. The device according to claim 6, wherein the translational conveying device (29, 30) and the carrier means (33) are displaceable relative to each other.

8. The device according to claim 6 or 7, wherein the translational conveying device (29, 30) is displaceable out of the plane of transport T.

9. The device according to any one of the claims 6 to 8, wherein the translational conveying device (29, 30) is attached to an adjustable sliding member (26, 27) for opening or closing a loading opening (17, 18).

10. The device according to any one of the preceding claims, wherein the carrier means (33) consists, at least in the region penetrated with radiation, of a substantially X-ray-transparent material.

11. A device (10) for the material testing of test objects (15) by means of X-radiation, comprising a translational conveying apparatus (14) for automatically serially delivering test objects (15) into or out of a testing position, and an X-ray device (20) with an X-ray source (12) for penetrating with radiation a test object (15) retained in a testing position on a carrier means (33), and an X-ray detector (13), wherein the test object (15) and the X-ray device (20) are rotatable relative to each other only about a vertical axis of rotation R during the X-ray testing, **characterized in that**, for X-ray testing, the X-ray device (20) is rotatable as a whole about the vertical axis of rotation R, and the carrier means (33) is configured as a translational conveying apparatus for the test object.

12. The device according to claim 11, wherein the X-ray source (12) and the X-ray detector (13) are each mounted to a rotatable carrier means (39, 40) disposed above or underneath the plane of transport T.

13. The device according to any one of the preceding claims, wherein the X-ray detector (13) comprises at least one detector line (13a, 13b, 13c).

14. The device according to any one of the preceding claims, wherein the X-ray detector (13) is disposed in the shape of an arc about the test object (15).

15. The device according to any one of the preceding claims, wherein the X-ray source (12) is a fan beam X-ray tube with a fan angle of at least 45°.

## Revendications

1. Dispositif (10) de contrôle de matériau d'objets à contrôler (15) au moyen de rayons X, comprenant un dispositif de transport translatoire (14) destiné à amener et à faire sortir en série de manière automatique des objets à contrôler (15) à ou bien d'une position de contrôle, ainsi qu'un dispositif à rayons X (20) ayant une source de rayons X (12) pour faire passer des rayons à travers un objet à contrôler (15) maintenu sur un support (33) dans la position de contrôle, et ayant un détecteur de rayons X (13), dans lequel, durant le contrôle par rayons X, ledit objet à contrôler (15) et ledit dispositif à rayons X (20) ne peuvent tourner l'un par rapport à l'autre qu'autour d'un axe de rotation R pour l'essentiel vertical, **caractérisé par le fait que**, pour le contrôle aux rayons X, ledit support (33) est rotatif dans l'ensemble, conjointement avec l'objet à contrôler (15) y maintenu, autour de l'axe de rotation R et que ledit support (33) est réalisé en tant que dispositif de transport translatoire pour ledit objet à contrôler.

2. Dispositif selon la revendication 1, dans lequel le support (33) présente un moyen de transport (35) tournant sans fin destiné à amener et à faire sortir un objet à contrôler (15) à ou bien de la position de contrôle.

3. Dispositif selon la revendication 2, dans lequel ledit moyen de transport (35) est une bande transporteuse.

4. Dispositif selon l'une quelconque des revendications précédentes, dans lequel ledit support (33) présente un appui (34) pour l'essentiel plan pour l'objet à contrôler (15).

5. Dispositif selon l'une quelconque des revendications précédentes, dans lequel ledit objet à contrôler (15) reste dans un plan de transport T continu durant l'ensemble de l'opération de chargement et de contrôle.

6. Dispositif selon l'une quelconque des revendications précédentes, comprenant au moins un dispositif de transport translatoire (29, 30) pour amener ou faire sortir un objet à contrôler (15) audit ou bien dudit support (33).

7. Dispositif selon la revendication 6, dans lequel ledit dispositif de transport translatoire (29, 30) et ledit support (33) sont déplaçables l'un par rapport à l'autre.

8. Dispositif selon la revendication 6 ou 7, dans lequel ledit dispositif de transport translatoire (29, 30) peut être déplacé hors dudit plan de transport T.

9. Dispositif selon l'une quelconque des revendications 6 à 8, dans lequel ledit dispositif de transport translatoire (29, 30) est monté sur un coulisseau réglable (26, 27) destiné à ouvrir ou bien à fermer une ouverture de chargement (17, 18).

10. Dispositif selon l'une quelconque des revendications précédentes, dans lequel ledit support (33) est réalisé, au moins dans la zone irradiée, dans une matière pour l'essentiel transparente aux rayons X.

11. Dispositif (10) de contrôle de matériau d'objets à contrôler (15) au moyen de rayons X, comprenant un dispositif de transport translatoire (14) destiné à amener et à faire sortir en série de manière automatique des objets à contrôler (15) à ou bien d'une position de contrôle, ainsi qu'un dispositif à rayons X (20) ayant une source de rayons X (12) pour faire passer des rayons à travers un objet à contrôler (15) maintenu sur un support (33) dans une position de contrôle, et ayant un détecteur de rayons X (13), dans lequel, durant le contrôle par rayons X, ledit objet à contrôler (15) et ledit dispositif à rayons X (20) ne peuvent tourner l'un par rapport à l'autre qu'autour d'un axe de rotation R vertical, **caractérisé par le fait que**, pour le contrôle aux rayons X, ledit dispositif à rayons X (20) est rotatif dans l'ensemble autour de l'axe de rotation R vertical et que ledit support (33) est réalisé en tant que dispositif de transport translatoire pour ledit objet à contrôler.

12. Dispositif selon la revendication 11, dans lequel ladite source de rayons X (12) et ledit détecteur de rayons X (13) sont montés chacun(e) sur un support (39, 40) apte à tourner et disposé au-dessus ou bien au-dessous dudit plan de transport T.

13. Dispositif selon l'une quelconque des revendications précédentes, dans lequel ledit détecteur de rayons X (13) comprend au moins une ligne de détecteurs (13a, 13b, 13c).

14. Dispositif selon l'une quelconque des revendications précédentes, dans lequel ledit détecteur de rayons X (13) est disposé en arc autour de l'objet à contrôler (15).

15. Dispositif selon l'une quelconque des revendications précédentes, dans lequel ladite source de rayons X (12) est un tube à rayons X à faisceau en éventail ayant un angle d'éventail de 45° au moins.
